(19) **Europäisches Patentamt**
**European Patent Office**
**Office européen des brevets**

(11) Veröffentlichungsnummer: **0 328 593 B1**

(12) **EUROPÄISCHE PATENTSCHRIFT**

(45) Veröffentlichungstag der Patentschrift :
**27.12.91 Patentblatt 91/52**

(51) Int. Cl.[5]: **F24H 1/00, F23D 14/18,**
**C01B 5/00, H01M 10/52,**
**B01J 8/02**

(21) Anmeldenummer : **88907107.2**

(22) Anmeldetag : **11.08.88**

(86) Internationale Anmeldenummer :
**PCT/DE88/00492**

(87) Internationale Veröffentlichungsnummer :
**WO 89/02054 09.03.89 Gazette 89/06**

(54) **KATALYTISCHER OXIDATIONSREAKTOR FÜR GASGEMISCHE.**

(30) Priorität : **01.09.87 DE 3729114**

(43) Veröffentlichungstag der Anmeldung :
**23.08.89 Patentblatt 89/34**

(45) Bekanntmachung des Hinweises auf die
Patenterteilung :
**27.12.91 Patentblatt 91/52**

(84) Benannte Vertragsstaaten :
**AT BE CH DE FR GB IT LI NL SE**

(56) Entgegenhaltungen :
**AU-A- 5 834 569**
**US-A- 3 976 510**
**US-A- 4 008 050**
**US-A- 4 078 893**

(56) Entgegenhaltungen :
**Patent Abstracts of Japan, vol.10, No**
**55(M-458)(2112) 5 March 1986**
**Chemical Abstracts, vol.96,No.18, 3 May 1982,**
**(Columbus, Ohio,US) see page 134, abstract**
**No.14505lj**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**W-8000 München 19 (DE)**

(72) Erfinder : **LEDJEFF, Konstantin**
**Ulmenweg 6**
**W-7812 Bad Krozingen (DE)**

(74) Vertreter : **Rackette, Karl, Dipl.-Phys. Dr.-Ing**
**Kaiser-Joseph-Strasse 179 Postfach 1310**
**W-7800 Freiburg (DE)**

**Beschreibung**

Die Erfindung betrifft einen katalytischen Oxidationsreaktor für Gasgemische, die Sauerstoff und zumindest ein mit diesem brennbares Gas aufweisen, wobei der Reaktor mit einem Kühlmedium in Verbindung steht und im Reaktor eine gasdurchlässige, einen Katalysator für die Oxidationsreaktion aufweisende erste Schicht angeordnet ist.

Ein derartiger Oxidationsreaktor ist beispielsweise aus der US-PS 3,976,510 bekannt. Derartige Oxidationsreaktoren beruhen auf der Tatsache, daß solche Gasgemische neben einer "normalen" Verbrennung mit Flamme auch flammlos verbrannt werden können. Für ein flammloses Verbrennen derartiger Gasgemische ist ein Katalysator notwendig, der die Reaktion zwischen Sauerstoff und dem mit diesem brennbaren Gas bzw. Gasgemisch unter Herabsetzung der Aktivierungsenergie katalysiert, so daß auch eine Reaktion weit unter den Zündtemperaturen derartiger Gemische ermöglicht ist. Als Beispiel sei die Reaktion zwischen Wasserstoff und Sauerstoff, die sogenannte "Knallgasreaktion" angeführt. Bei Raumtemperatur reagieren Wasserstoff und Sauerstoff praktisch überhaupt nicht miteinander.

Erst ein Überschreiten der Zündtemperatur (etwa 600°C), beispielsweise durch einen Zündfunken, führt zu einer Reaktion zwischen diesen beiden Partnern. Liegt das Knallgasgemisch in stöchiometrischer Form vor, erfolgt diese Reaktion schlag- bzw. explosionsartig. Derartige explosive zündfähige Gemische treten beispielsweise auch bei Gasgemischen zwischen Sauerstoff und Kohlenwasserstoffen, wie Methan oder Propan, auf, die bei ungewollten Zündungen erhebliche Schäden verursachen können. So sind beispielsweise zahlreiche Grubenunglücke auf explosive Methan/Sauerstoff-Gasgemische zurückzuführen.

Eine Möglichkeit, um die Reaktion derartiger zündfähiger explosiver Gemische zu verhindern, ist, diese Gemische zum Beispiel durch Beimischen eines Inertgases oder Geringhalten eines der beiden Teile, also Sauerstoff oder brennbares Gas, in nicht zündfähigem Zustand zu halten. Sollen solche Gemische jedoch zur Energie- oder Wärmeerzeugung herangezogen werden, ist die Energie- bzw. Wärmeausbeute pro eingesetztem Gasvolumen äußerst gering.

Insbesondere Wasserstoff hat als zukünftiger Energieträger gute Chancen, da sich das Konzept der "Wasserstoffwirtschaft" durch große Umweltfreundlichkeit auszeichnet. Bei der Verbrennung von Wasserstoff mit Sauerstoff entsteht als einziges Reaktionsprodukt Wasser, so daß eine Energie- oder Wärmegewinnung auf dieser Basis als absolut umweltneutral bzw. umweltfreundlich anzusehen ist.

Wird beispielsweise aus Sonnen-, Wind- oder Wasserenergie elektrischer Strom erzeugt, so kann durch Wasserelektrolyse Wasserstoff und Sauerstoff erzeugt werden. Diese Gase sind gut speicherbar und transportierbar. Am Ort der Energie- bzw. Wärmegewinnung können die Reaktionspartner Wasserstoff und Sauerstoff, die ja bei der Elektrolyse in dem exakt stöchiometrischen Verhältnis (2 : 1) entstehen, wieder unter Bildung von Wasser rekombiniert werden.

In katalytischen Oxidationsreaktoren der eingangs genannten Art kann diese Rekombination bei Raumtemperatur ohne Vorhandensein eines Zündfunkens aufgrund der Wirkung des Katalysators durchgeführt werden. Der Katalysator ermöglicht auch eine Reaktion zwischen den Partnern in an sich nicht zündfähigen Gemischen, die Energieausbeute dabei ist aber, wie zuvor erwähnt, geringer als bei Einsatz von exakt stöchiometrischen Gemischen.

Der aus der US-PS 3,976,510 bekannte katalytische Oxidationsreaktor dient dazu, Wasserstoff und Sauerstoff, die in stöchiometrischem Verhältnis beim Laden bzw. Entladen von Batterien entstehen, zu Wasser zu rekombinieren. Dabei ist im Reaktor eine gasdurchlässige, mit einem Katalysator für die Oxidationsreaktion ausgestattete erste Schicht angeordnet, die von einer Seite her vom Wasserstoff/Sauerstoffgasgemisch durchströmt wird. Der in der ersten Schicht feinstverteilte, auf einem Trägermaterial aufgebrachte Katalysator, aktiviert den Wasserstoff bzw. die Sauerstoffbiradikalmoleküle und ermöglicht deren Reaktion bei Raumtemperatur. Die Rekombination zu Wasser ist eine stark exotherme Reaktion und liefert etwa 16.000 kJ pro kg Wasser (etwa 70 kcal pro Mol gebildeten Wassers), so daß sich die erste Schicht rasch erwärmt und das Reaktionsprodukt Wasser in dampfförmiger Form die erste Schicht verläßt. Dabei bleibt die Strömungsrichtung erhalten, d.h. auf einer Seite der ersten Schicht tritt das Wasserstoff/Sauerstoffgasgemisch ein, auf der anderen Seite tritt Wasserdampf aus. Damit sich die erste Schicht nicht derart aufwärmt, daß die Zündtemperatur des Wasserstoff/Sauerstoffgasgemisches erreicht wird, ist eine in Strömungsrichtung durch die erste Schicht gesehen, hinter dieser angeordnete Kühlung vorgesehen. Dabei ist ein erster Kühlmittelkreislauf vorgesehen, der die Reaktionswärme über 100°C abführt. Ein zweiter Kühlkreis dient dazu, die Kondensation des Reaktionswassers bei Temperaturen von unter 100°C herbeizuführen bzw. die dabei entstandene Wärme abzuführen.

Die Kondensation des gasförmigen Wasserdampfes, in Strömungsrichtung hinter der ersten Schicht gesehen, ist mit einer erheblichen Volumenverminderung beim Übergang gasförmig zu flüssig verbunden, wodurch ein Unterdruck hinter der ersten Schicht entsteht. Dieser Unterdruck entfaltet eine Sogwirkung auf das in Strömungsrichtung vor der ersten Schicht befindliche Wasserstoff/Sauerstoffgemisch, so daß ein erhöhter Gastransport in die erste Schicht erfolgt. Dies hat zur Folge, daß in der ersten Schicht ein erhöhter Umsatz stattfindet, diese sich also sehr schnell aufheizt und sehr rasch die Zündtemperatur des Gasgemisches erreichen kann. Dies hätte dann eine explosionsartige Reaktion, verbunden mit der Zerstörung des gesamten Reaktors, zur Folge. Diese kritische Situation kann bei Störungen in den Kühlmittelkreisläufen oder insbesondere in der Anlaufphase des Reaktors auftreten. Hat das Kühlmittel beispielsweise in der Anlaufphase des Reaktors unmittelbar hinter der ersten Schicht noch nicht seine Betriebstemperatur erreicht, d.h. ist es noch kalt und hat es — im Beispiel der Verbrennung zu Wasser — noch eine Temperatur von unter 100°C, so findet unmittelbar hinter der ersten Schicht bereits eine Kondensation mit dem verbundenen Saugeffekt statt, so daß sich die erste Schicht sehr rasch auf die Zündtemperatur erhitzen kann und die Gefahr der Knallgasexplosion besteht. Dieser zuvor beschriebene Saugeffekt durch Auskondensieren von kondensierbaren Reaktionsprodukten tritt beispielsweise gleichermaßen bei der Verbrennung von Methan und Propan auf, da auch hier Wasser als Reaktionsprodukt entsteht.

Der zuvor beschriebene Saugeffekt tritt aber nicht nur bei Reaktionen auf, die zu kondensierbaren Reaktionsprodukten führen, sondern im Prinzip auch dann, wenn gasförmige Reaktionsprodukte entstehen, die lediglich ein geringeres Volumen benötigen als die Ausgangsprodukte. Dieser ist zwar dann möglicherweise nicht mehr so groß wie beim Auskondensieren des gesamten Reaktionsproduktes, ist aber noch so beträchtlich, daß ein derartiger Unterdruck entsteht, daß ein Erhitzen der ersten Schicht auf Zündtemperatur möglich ist.

Selbst eine übermäßige Abkühlung des gegebenenfalls gasförmigen Reaktionsproduktes kann mit der dabei verbundenen Volumenkontraktion einen Sogeffekt mit der damit verbundenen Überhitzungsgefahr verursachen.

Die zuvor genannten bekannten katalytischen Oxidationsreaktoren, bei denen die den Katalysator aufweisende erste Schicht durchströmt wird, wobei Durchströmen bedeutet, daß auf einer Seite die Reaktionspartner in die Schicht eintreten und auf der anderen Seite die Reaktionsprodukte austreten, haben allesamt zum Nachteil, daß systembedingt ein Überhitzen aufgrund einer Sogwirkung nach der Schicht nicht ausgeschlossen werden kann. Die baulichen bzw. sicherheitstechnischen Maßnahmen, um dieses mit hoher Wahrscheinlichkeit auszuschließen, sind sehr aufwendig und beeinflussen die Wirtschaftlichkeit des Oxidationsreaktors.

Würde beispielsweise der aus der US-PS 3,976,510 beschriebene Oxidationsreaktor zur Wärmeerzeugung in Gebäuden verwendet, müßte für den ersten Kühlmittelkreislauf, der eine Betriebstemperatur von über 100°C aufweist, ein spezielles Kühlmittel, das nicht Wasser sein kann, vorgesehen werden, das außerdem noch vor der Inbetriebnahme auf Betriebstemperatur gebracht werden müßte. Ein derartiger Reaktor wäre somit technisch äußerst kompliziert und baulich aufwendig und es kann nicht auf das beispielsweise in in Gebäuden vorhandene Kühlmedium, nämlich Leitungswasser, zurückgegriffen werden.

Aufgabe der vorliegenden Erfindung ist es, einen Oxidationsreaktor der eingangs genannten Art derart zu verbessern, daß bei einfachem Aufbau insbesondere explosive Gemische in jeder Betriebsphase kontrolliert umgesetzt werden können, wobei zur Aufnahme der entstehenden Wärme nur ein Kühlmittelkreislauf notwendig ist, dessen Arbeitstemperaturen auch unter 100°C liegen können.

Erfindungsgemäß wird die Aufgabe durch die kennzeichnenden Merkmale des Anspruchs 1 gelöst.

Die dritte, gas- und flüssigkeitsundurchlässige Schicht sorgt dafür, daß die erste Schicht nicht durchströmt werden kann, sondern daß die Reaktionspartner, von der zweiten gasdurchlässigen Schicht kommend, in die erste Schicht eintreten können, dort aufgrund der katalytischen Wirkung des Katalysators miteinander reagieren und die Reaktionsprodukte entgegen dieser Strömungsrichtung wieder in Richtung der ersten gasdurchlässigen Schicht austreten können. Der erfindungsgemäße Oxidationsreaktor arbeitet somit im Gegenstromprinzip. Die gas- und flüssigkeitsundurchlässige dritte Schicht dient lediglich dazu, Wärme an das Kühlmedium, mit dem die dritte Schicht in thermischem Kontakt steht, zu überführen. Die dritte Schicht kann auch Teil des Reaktorgehäuses sein. Das Kühlmedium kann Wasser sein, wie es in jedem Haushalt bzw. in Gebäuden in Leitungen zur Verfügung steht, so daß Betriebstemperaturen unter 100°C möglich sind. Die in Einströmrichtung vor der ersten, mit dem Katalysator versehenen Schicht gelagerte gasdurchlässige zweite Schicht dient als eine Gasdiffusions-Sperrschicht und sorgt für eine bestimmte steuerbare Gasgemischzufuhrmenge zur ersten katalysatorhaltigen Schicht. Die in den Oxidationsreaktor eintretende Gasmischung mit den Reaktionspartnern dringt aufgrund der Gasmolekularbewegung und der thermodynamischen Grundgesetze bezüglich der Entropie in die zweite gasdurchlässige Schicht ein, wobei die Ausgestaltung bzw. der Aufbau dieser Schicht bei bestimmten Durckverhältnissen nur eine ganz bestimmte definierte Gasströmung zuläßt. Dadurch trifft ein vorbestimmbarer konstanter Gasstrom auf die katalysatorhaltige erste Schicht, in der dann dieses Gasgemisch reagiert. Die Reaktionsprodukte, die gasförmig, flüssig oder kondensierbar sein können, können nur in Richtung der zweiten Schicht wieder aus der ersten Schicht austreten. Im Falle gasförmiger Produkte diffundieren diese dann in umgekehrter Richtung wie die Ausgangsprodukte durch die zweite gasdurchlässige Schicht wieder hindurch, wobei die Diffusionsgeschwindigkeit wiederum durch den Aufbau der Schicht und den Diffusionsstrom der eindringenden Ausgangsprodukte bestimmt ist. Bei einer bestimmten Temperatur ist somit ein exakt steuerbarer Diffusionsgegenstrom erzeugbar, d.h. ein kontrollierbarer Materialtransport durch den Oxidationsreaktor bzw. durch dessen erste und zweite Schicht ist möglich und gleichzeitig eine steuerbare Wärmeabfuhr durch das Kühlmittel gegeben.

Der zuvor beschriebene Saugeffekt und die damit verbundene Überhitzungsgefahr für die den Katalysator tragende Schicht ist völlig ausgeschlossen. Entstehen kondensierbare Reaktionsprodukte und kondensieren diese in der ersten katalysatorhaltigen Schicht aus, "verwässern" sie diese Schicht, so daß die Katalysatoroberfläche desaktiviert wird und keine unkontrollierte gesteigerte, sondern eine verlangsamte Reaktion stattfindet. Durch Auskondensieren in der ersten katalysatorhaltigen Schicht entsteht zwar ein Druckgefälle zwischen Reaktorraum und dieser Schicht, was aber nur zu einer kurzzeitigen erhöhten Diffusion von Reaktorraum durch die zweite gasdurchlässige Schicht in Richtung erster Schicht führt, dort jedoch nicht zu einer überkritischen Erhitzung der verwässerten ersten Schicht führen kann. Sollte ein Auskondensieren der Reaktionsprodukte in der zweiten gasdurchlässigen Schicht erfolgen, wird allenfalls eine Reduzierung des Diffusionsstromes der Ausgangsprodukte in Richtung der katalysatorhaltigen Schicht erreicht, so daß auch hier wiederum keine überkritische Erhitzung der ersten Schicht auf die Zündtemperatur des Gasgemisches erfolgen kann.

Zweckmäßigerweise weist die zweite Schicht eine schlechte Leitfähigkeit auf, wodurch die Wärme kontrolliert und richtungsbestimmt lediglich über die dritte gas- und flüssigkeitsundurchlässige Schicht auf das Kühlmedium übertragen wird. Besonders einfach herstellbar und somit zweckmäßig ist ein Oxidationsreaktor dadurch, daß die erste und zweite Schicht aus demselben Trägermaterial aufgebaut sind und das Trägermaterial der ersten Schicht mit dem Katalysator versehen ist.

Zweckmäßigerweise bestehen dabei die erste bzw. zweite jeweils gasdurchlässige Schicht in Form poröser Körper, Wollen, Vliese, Schäume oder Gewebe aus Keramik, Mineralien, Glas, Asbest oder Kunststoff.

Zweckmäßigerweise bestehen dabei die erste bzw. zweite Schicht aus Verbundmaterialien, wie kunststoffgebundene Kohlen.

Eine besonders günstige Wärmeverteilung innerhalb der drei Schichten ist dadurch erreicht, daß die erste Schicht eine höhere Wärmeleitfähigkeit aufweist als die zweite Schicht. Dadurch ist gewährleistet, daß beispielsweise in der Anlaufphase in der ersten Schicht sehr rasch die Betriebstemperatur erreicht wird, wobei durch die hohe Wärmeleitfähigkeit auch eine gleichmäßige Erwärmung und Wärmeverteilung innerhalb der ersten Schicht erfolgt. Im Einströmbereich des Oxidationsreaktors, insbesondere auch in der Anlaufphase, findet zunächst vorwiegend eine Diffusion durch die zweite gasdurchlässige Diffusionssperrschicht in Richtung erster Schicht statt, ohne daß diese Diffusion durch entgegenströmende Reaktionsprodukte beeinträchtigt ist. Diese ungehinderte Strömung führt anfänglich zu einem großen Stofftransport in Richtung katalysatortragende Schicht und führt durch die einsetzende Reaktion dort zu einer Erwärmung. Die entstehende Reaktionswärme verteilt sich in der ersten Schicht und wird nicht auf die zweite Gasdiffusionssperrschicht übertragen. Somit wird das auf die erste Schicht anströmende Ausgangsgemisch an Gasen nicht schon in der Diffusionssperrschicht erwärmt, so daß keine lokalen Überhitzungen in der ersten Schicht auftreten können.

Zweckmäßigerweise besteht in diesem Fall die erste Schicht aus Metall, Metallegierungen oder Metall enthaltenden gasdurchlässigen Materialien, oder aus Kohlenstoff. Derartige Materialien dienen einerseits als gutes Trägermaterial für den Katalysator und weisen außerdem eine hohe Wärmeleitfähigkeit auf.

Vorteilhafterweise besteht der Katalysator dabei aus einem Element der Platingruppe, insbesondere aus Platin selbst. Platin zeigt besonders bei der Verbrennung von Wasserstoff und Sauerstoff hervorragende katalytische Eigenschaften und ist durch an sich bekannte Methoden feinstverteilt auf ein Trägermaterial aufbringbar.

Zweckmäßigerweise besteht der Katalysator aus einem Silber-Kobalt-Mangan-Mischkatalysator, der insbesondere bei metallischen Trägermaterialien der ersten Schicht zugleich mit dieser aufgebaut werden kann, wodurch die Herstellung besonders wirtschaftlich ist.

Ein besonders günstig vor Überhitzung, insbesondere bei der Anlaufphase gesicherter Oxidationsreaktor ist dadurch geschaffen, daß die dritte Schicht eine schlechtere Wärmeleitfähigkeit aufweist als die erste Schicht.

Dies ist besonders vorteilhaft dann verwirklicht, wenn die erste Schicht eine bessere Leitfähigkeit als die zweite und die dritte Schicht aufweist. In diesem Fall ist die erste, den Katalysator tragende, gut wärmeleitfähige Schicht zwischen zwei Schichten mit schlechterer Wärmeleitfähigkeit aufgenommen, so daß die in der ersten Schicht entstehende Wärme sehr rasch und nur in der ersten Schicht verteilt wird, so daß der Oxidationsreaktor im reaktiven Bereich der ersten Schicht rasch und gleichmäßig seine Betriebstemperatur erreichen kann.

Besonders wirtschaftlich und einfach aufgebaut ist ein Oxidationsreaktor dadurch, daß die dritte Schicht aus Kunststoff, wie beispielsweise Silikon, oder aus Kunststoff-Verbundwerkstoffen besteht.

Zweckmäßigerweise besteht die dritte Schicht, insbesondere bei hohen Betriebstemperaturen, aus dichtem Keramik oder Glas.

Besonders vorteilhaft ist die Innenfläche des Oxidationsreaktors mit der dritten Schicht ausgekleidet, auf der die erste und auf dieser wiederum die zweite Schicht angeordnet ist. Die Innenfläche des Reaktors kann einfach durch innenflächiges Beschichten mit Kunststoff oder Keramik mit der gas- und wasserundurchlässigen Schicht versehen werden, wodurch ein inniger und intensiver Verbund zwischen Reaktorinnenfläche und dritter Schicht möglich ist, was zu einem günstigen thermischen Kontakt führt.

Ein besonders klein zu bauender Oxidationsreaktor ist dadurch erreicht, daß er als Rohrreaktor ausgebildet ist, in dem die erste, zweite und dritte Schicht konzentrisch angeordnet sind.

Eine besonders intensive und genau steuerbare Wärmeabfuhr aus dem Reaktor ist dadurch verwirklicht, daß die Außenfläche des Reaktors in dem Bereich mit einem Kühlmedium in Verbindung steht, wo er an seiner Innenseite mit der dritten Schicht versehen ist.

Vorteilhafterweise weist der Reaktor eine Mischvorrichtung auf, wodurch im Reaktorraum eine hohe Gleichmäßigkeit der Gasgemischzusammensetzung erreicht ist.

Eine besonders gute Durchmischung mit gleichzeitiger Mengen- und Wärmesteuerung im Reaktor ist dadurch erreicht, daß in der Mischvorrichtung ein Teil der aus dem Reaktorraum austretenden Gase zugemischt werden.

Ein besonders zweckmäßiger Oxidationsreaktors, insbesondere im Fall von kondensierbaren Reaktionsprodukten, ist dadurch geschaffen, daß die Innenfläche des Reaktors nur teilweise mit der ersten, zweiten bzw. dritten Schicht versehen ist und die freie Innenfläche derart mit dem Kühlmedium in Verbindung steht, daß kondensierbare Reaktionsprodukte, wie beispielweise Wasser, an dieser freien Fläche auskondensierbar sind.

Zweckmäßigerweise ist dazu im Bodenbereich ein Sammelbehälter für das Reaktionskondensat vorgesehen, der über Ventile, wie beispielsweise ein Schwimmerventil, von Zeit zu Zeit entleerbar ist.

Vorteilhafterweise ist der Oxidationsreaktor, insbesondere im Falle von kondensierbaren Reaktionsprodukten, wodurch diese Kondensation gesteigert wird, mit einem Überdruck, insbesondere $\geq 0{,}5$ bar betreibbar.

Eine besonders intensive Wärmegewinnung ist in einem Oxidationsreaktor dadurch gegeben, daß das Gasgemisch eine stöchiometrische Knallgasmischung ist. In dieser stark exothermen Reaktion reagieren die Ausgangsgase Wasserstoff und Sauerstoff vollständig miteinander unter Bildung von lediglich Wasser als Reaktionsprodukt, das gegebenenfalls unmittelbar im Reaktorraum kondensiert werden kann. Werden die Reaktionsbedingungen so gewählt, daß in der ersten Schicht gasförmiges Wasser entsteht, so ist eine genau berechenbare Diffusionsgegenströmung steuerbar, und außerdem findet eine Konvektion im Reaktorraum statt, d.h. das dampfförmige Reaktionsprodukt Wasser schlägt sich an der kalten, freien und gekühlten Innenfläche des Reaktors nieder und läuft als Wasserfilm an dieser Wand aufgrund der Schwerkraft abwärts. Der Wasserfilm kühlt sich in Richtung Reaktorboden immer weiter ab, so daß in dem unmittelbar davor befindlichen Gasraum ein Temperaturgefälle entsteht, was in einem Konvektionskreislauf im Reaktorraum resultiert.

Falls eine geringere Wärmeleistung des Reaktors gewünscht ist, kann zweckmäßigerweise das Gasgemisch ein Inertgas, wie beispielsweise Stickstoff, aufweisen. In diesem Fall kann Luft als sauerstoff- bzw. inertgashaltige Komponente eingesetzt und mit einem brennbaren Gas, beispielsweise Methan oder Propan, verbrannt werden.

Besonders vorteilhaft wird eine Konvektion im Reaktorraum dadurch erreicht, daß bei Betrieb mit kondensierbaren Reaktionsprodukten die Mischvorrichtung einen pulsierenden Gasstrom im Reaktor erzeugt, wodurch auch gleichzeitig eine verbesserte Kondensation im Reaktorraum erreicht wird.

Die Erfindung wird anhand einiger ausgewählter Ausführungsbeispiele in Zusammenhang mit den beiliegenden Zeichnungen näher beschrieben und erläutert. Es zeigt :

Figur 1    einen Längsschnitt eines ersten Ausführungsbeispiels eines erfindungsgemäßen Oxidationsreaktors,

Figur 2    schematisch einen Längsschnitt eines zweiten Ausführungsbeispiels, und

Figur 3    einen Längsschnitt eines dritten Ausführungsbeispiels eines Oxidationsreaktors.

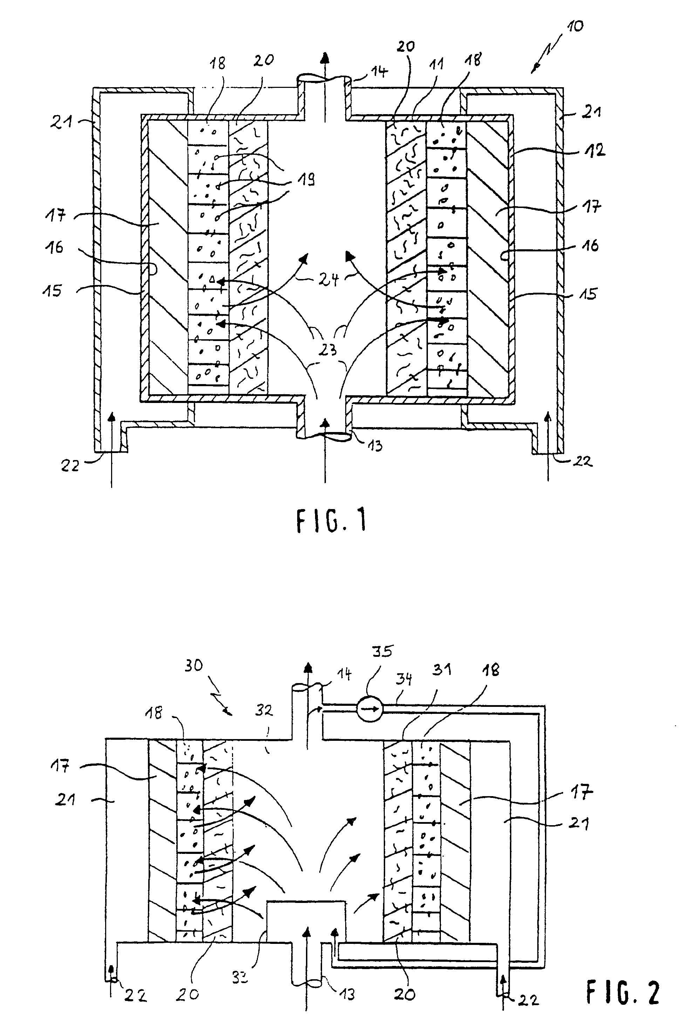

Ein in Fig. 1 gezeigter katalytischer Oxidationsreaktor 10 weist ein Reaktorgehäuse 11 auf, das den eigentlichen Reaktor 12 umgrenzt.

Der Reaktor 12 weist ein im Querschnitt kreisförmiges Reaktorgehäuse 11 auf, das bodenseitig mit einem Einlaß 13 und deckelseitig mit einem Auslaß 14 versehen ist. Der Einlaß 13 bzw. Auslaß 14 befinden sich in etwa dem Mittelpunktbereich der kreisförmigen Boden- bzw. Deckelfläche. Das Reaktorgehäuse 11 besteht dabei aus Metall, beispielsweise einem Stahl.

Der Reaktor 12 ist im Bereich seiner runden Seitenfläche 15 an seiner Innenseite bzw. Innenfläche 16 mit einer dritten Schicht 17 versehen, die gas- und wasserundurchlässig ist.

Die dritte Schicht 17 besteht aus Silikon und ist direkt auf die Innenfläche 16 des metallenen Reaktorgehäuses 11 aufgebracht. Die Silikonschicht kleidet die Innenfläche 16 voll ständig aus und ist mit dieser fest haftend verbunden, so daß weder Gas noch Flüssigkeit in die dritte Schicht bzw. zwischen die Schicht und die Innenfläche 16 gelangen kann. Die dritte Schicht 17 aus Silikon weist dabei eine Schichtdicke von mehreren Millimetern auf. Im weiteren Ausführungsbeispiel besteht die dritte Schicht aus anderen temperaturbeständigen Kunststoffen, wie beispielsweise Teflon oder auch aus dichten Keramik- oder Glasschichten. Gemeinsame Bedingung für diese Schichten ist jeweils, daß sie gas- und flüssigkeitsundurchlässig sind. Der thermische Ausdehnungskoeffizient des Materials des Reaktorgehäuses 11 und der dritten Schicht 17 wird dabei so gewählt, daß sie sich nicht wesentlich unterscheiden, so daß auch bei häufigem Wechsel zwischen Reaktorbetrieb und Reaktorstillstand eine fest haftende Verbindung gewährleistet ist. Die dritte Schicht 17 kann auch Teil des Reaktorgehäuses sein.

Auf der dritten Schicht 17 aus Silikon ist über die gesamte Höhe des Reaktors 12 eine weitere erste Schicht 18 aufgebracht, die gas- und flüssigkeitsdurchlässig ist.

Die erste Schicht 18 besteht dabei aus einem Ring aus einem porösen Keramikmaterial auf Aluminiumoxydbasis. Die Porengröße des Keramikrings ist dabei so gewählt, daß Gase und Flüssigkeiten durch den Ring hindurchtreten können.

In der ersten Schicht 18 ist auf dem porösen Keramikmaterial feinstverteilt ein Katalysator 19 aufgebracht, der in dem in Fig. 1 gezeigten Beispiel aus Platin besteht. Das Aufbringen des Platinkatalysators erfolgt dabei in der Weise, daß die ringförmige erste Schicht mit einer Plastinsalzlösung behandelt und anschließend in einer reduzierenden Atmosphäre metallisches Platin abgeschieden wird, das feinstverteilt in der porösen Keramikschicht fest haftend aufgenommen ist. Das feinstverteilte Platin dient als Katalysator für eine flammlose Verbrennung bzw. Oxidationsreaktion in der ersten Schicht 18.

Die Porengröße bzw. deren innere Oberfläche kann je nach reagierendem Gasgemisch bzw. entstehendem Produkt abgestimmt werden, wodurch dann eine bestimmte Diffusion der miteinander zu reagierenden Stoffe in die erste Schicht 18 bzw. eine Diffusion der Reaktionsprodukte aus der Schicht 18 steuerbar ist.

Soll im Oxidationsreaktor 10 beispielsweise ein stöchiometrisches Gemisch von Wasserstoff und Sauerstoff im Volumenverhältnis 2 : 1 zur Reaktion gebracht werden, wobei Wasser je nach Reaktionsbedingungen in flüssiger oder gasförmiger Form anfällt, so ist die gewählte Porengröße bzw. Porenzahl ein Parameter für die Leistung des Oxidationsreaktors.

In weiteren, hier nicht gezeigten Beispielen, besteht die erste Schicht 18 in Form von Wollen, Vliesen, Schäumen, Geweben od. dgl. aus Keramikmaterialien, aus Mineralien, Glas, Asbest oder Kunststoff, oder aus einem porösen Verbundmaterial aus in Kunststoff gebundenen Kohlen.

Der Katalysator besteht in weiteren Ausführungsbeispielen aus anderen Metallen der Platingruppe oder aus Silber, Kobalt, Mangan-Mischkatalysatoren, wie sie beispielsweise aus der US-PS 4,302,360 bekannt sind.

Als Trägermaterialien für die erste Schicht 18 sind auch metallische Metallegierungen oder Metall enthaltende Träger möglich, die beispielsweise in Form feinster Maschengitter in Ringform in das Reaktorgehäuse 11 eingesetzt werden können.

Die Schichtdicke der zweiten Schicht 18 ist dabei in dem in Fig. 1 gezeigten Ausführungsbeispiel gleich groß wie die der dritten Schicht 17, beträgt also einige Millimeter.

Auf der ersten Schicht 18 ist eine zweite Schicht 20 angeordnet, die ebenfalls eine Ringform aufweist und die innere Ringfläche der ersten Schicht 18 völlig bedeckt.

Die zweite Schicht 20 ist ebenfalls gas- und flüssigkeitsdurchlässig und besteht in dem in Fig. 1 gezeigten Ausführungsbeispiel aus einem Vlies aus Keramikmaterial auf Aluminiumoxydbasis. Auch die zweite ringförmige Schicht 20 stellt einen porösen Körper mit zahlreichen Öffnungen und sehr großer Oberfläche dar.

In weiteren Ausführungsbeispielen besteht die zweite ringförmige Schicht 20 in Form von porösen Körpern, Wollen, Schäumen, Geweben aus Keramik, Mineralien, Glas, Asbest, Kunststoff oder porösen Verbundmaterialien wie kunststoffgebundene Kohlen.

Auch in der zweiten Schicht 20 stellt die Porengröße bzw. Porenzahl ein Parameter für die Leistungsfähigkeit des Oxidationsreaktors 10 dar.

In einem weiteren, hier nicht gezeigten Ausführungsbeispiel besteht sowohl die erste Schicht 18 als auch die zweite Schicht 20 aus identischen Strukturen, wie poröse Körper, Wollen, Vliese, Schäume, Gewebe etc. aus Keramik, Mineralien, Glas, Asbest, Kunststoff oder porösen Verbundmaterialien wie kunststoffgebundene Kohlen, so daß nur eine Materialart notwendig ist, um die Ringe der ersten 18 bzw. zweiten Schicht 20 aufzubauen. Im Unterschied zur zweiten Schicht 20 ist lediglich zusätzlich in der ersten Schicht 18 der Katalysator feinstverteilt oberflächig aufgebracht.

Die Außenseite des Reaktorgehäuses 11 ist in einem Bereich, in dem dessen Innenfläche 16 mit der dritten Schicht 17 versehen ist, mit einer Kühlung 21 ausgestattet. Die Kühlung 21 wird über bodenseitige Einlässe 22 mit einem Kühlmedium gespeist, das deckelseitig über hier nicht gezeigte Auslässe wieder aus der Kühlung 21 austritt und je nach Ausbildung der Kühlung als offenes oder geschlossenes System einem Abfluß zugeführt wird oder über Wäremaustauscher, beispielsweise Heizkörper in Wohnungen, den Einlässen 22 wieder zugeführt wird. Das Kühlmedium ist im in Fig. 1 gezeigten Ausführungsbeispiel Wasser, das Heizkörper in Gebäuden erwärmt.

Die Kühlung 21 entzieht dem Oxidationsreaktor 10 Wärme über die dritte Schicht 17 bzw. dem entsprechenden Teil des Reaktorgehäuses 11.

Die Arbeits- und Wirkungsweise des in Fig. 1 gezeigten Rohr- bzw. Spaltreaktors 12 ist derart, daß dem Reaktor 12 über den bodenseitigen Einlaß 13 die miteinander zu reagierenden Gase zugeführt werden, also beispielsweise Wasserstoff und Sauerstoff im stöchiometrischen Verhältnis von 2 :1. Das Gasgemisch aus Wasserstoff und Sauerstoff diffundiert durch die zweite Schicht 20 hindurch in die erste Schicht 18 hinein und beginnt alsbald bei Berührung mit dem Katalysator 19 in der ersten Schicht 18 zu Wasser zu reagieren. Die bei der exothermen Reaktion frei werdende Wärmeenergie heizt die erste Schicht 18 auf, so daß, falls diese eine Temperatur von 100°C übersteigt, das Reaktionsprodukt Wasser in dampfförmigem Zustand anfällt. Da die dritte Schicht 17 gas- und flüssigkeitsundurchlässig ist, kann der Wasserdampf nur in Richtung der zweiten Schicht 20 aus der ersten Schicht 18 austreten. Es findet also alsbald nach Inbetriebnahme des Reaktors 12 nach einer anfänglichen Diffusionsrichtung der zu reagierenden Gase in Richtung der ersten Schicht 18, wie dies durch Pfeile 23 angedeutet ist, auch eine Strömung in entgegengesetzter Richtung statt, d.h. von der ersten Schicht 18 in Richtung der zweiten Schicht 20, wie dies durch Pfeile 24 angedeutet ist. Es bilden sich also zwei gegenläufige Gasströme längs der Pfeile 23 bzw. 24 aus, die bei Erreichen einer bestimmten Betriebstemperatur des Reaktors eine vorherbestimmte Größe in Betrag und Richtung aufweisen, wodurch ein kontrollierter Strömungsverlauf im Reaktor 12 geschaffen ist. Bei der Reaktion eines stöchiometrischen Gemisches von zwei Volumenteilen Wasserstoff und einem Volumenteil Sauerstoff entstehen zwei Volumenteile Wasserdampf als Reaktionsprodukt, d.h. es findet eine Reaktion unter Volumenverminderung statt. Dies hat zur Folge, daß längs der Richtung der Pfeile 23 ein Druckabfall im Bereich der ersten Schicht 18 festzustellen ist, der die Ausgangsstoffe durch die zweite Schicht 20 "saugt". Die poröse, vielfach verästelte zweite Schicht 20 stellt sich diesem Gasstrom als Strömungswiderstand entgegen und erlaubt nur eine bestimmte Diffusion in Richtung der ersten Schicht 18, dem eigentlichen Reaktionsort. Die zweite Schicht 20 stellt also eine Diffusionssperrschicht dar, die eine dosierte, vorbestimmte Menge der ersten Schicht 18 zutreten läßt. Die zweite Schicht 20 ist schlecht wärmeleitend.

Die Wärmeabfuhr erfolgt also vorwiegend in Richtung der dritten Schicht 17 zum Kühlmedium. Die in Richtung der Pfeile 24 aus der zweiten Schicht 20 austretenden Reaktionsprodukte, also Wasserdampf, können über den deckelseitigen Auslaß 14 den Reaktor 12 verlassen. Diejenigen Mengen an brennbaren Gasen in der durch den Einlaß 13 eintretenden Gasmischung, also hier Wasserstoff, die ohne umgesetzt zu werden aus dem Auslaß 14 den Reaktor 12 verlassen, sind dermaßen gering und stellen in Mischung mit dem Reaktionsprodukt (dampfförmiges Wasser) kein zündfähiges Gemisch mehr dar, so daß dieses Gemisch gefahrlos abgelassen werden kann.

Der in Fig. 1 gezeigte Oxidationsreaktor 10 ist zur Wärmeerzeugung in Gebäuden vorgesehen und wird unter atmosphärischem Druck betrieben. Das Kühlmedium ist, wie erwähnt, Wasser und kann in einem geschlossenen Kreislauf als Wärmemedium in Heizkörpern eingesetzt werden, die gleichzeitig als Kühler für das Kühlmedium wirken, oder das Wasser kann als Brauchwasser Entnahmestellen wie Wasserhähnen, Duschen od. dgl. zugeführt werden.

Die Leistung des Oxidationsreaktors ist neben den bereits zuvor erwähnten Parametern, wie Zusammensetzung des Ausgangs-Gasgemisches, Porengröße und Schichtdicke der ersten bzw. zweiten Schicht bzw. Wärmeleitfähigkeit und thermischem Kontakt zwischen dritter Schicht 17 und Kühlung 21, auch vom Druck der zugeführten Ausgangsgase abhängig. Da beispielsweise die Wasserstoff-Verbrennung zu Wasser unter Volumenverminderung abläuft, wird diese Reaktion durch eine Druckerhöhung begünstigt. In weiteren, hier nicht gezeigten Ausführungsbeispielen wird der Reaktor 12 mit erhöhtem Druck, beispielsweise 0,5 oder 1 bar, gefahren, um eine Leistungs steigerung zu ermöglichen. Der Reaktor 12 kann auch mit einer Druckregelung versehen sein, so daß wahlweise im drucklosen oder in Druckbetrieb gefahren werden kann.

Das systemimmanente Gegenstromprinzip führt auch dazu, daß keine örtlichen Überhitzungen in der ersten Schicht 18, dem eigentlichen Reaktionsort, möglich sind, so daß zu keinem Zeitpunkt die Gefahr einer Zündung des Knallgasgemisches unter explosionsartiger Reaktion möglich ist.

In der Anlaufphase, d.h. wenn sowohl die erste Schicht 18 als auch die zweite Schicht 20 noch kalt sind und eine Temperatur von unter 100°C aufweisen, kann es allenfalls zu einem Auskondensieren von Wasser in einem oder beiden dieser Schichten führen, was aber nicht zu einem Saugeffekt derart führt, daß große Mengen an Ausgangskomponenten in die erste Schicht 18 transportiert werden, sondern führt noch eher zu einer Verlangsamung der Reaktion durch Verwässern der ersten 18 bzw. zweiten Schicht 20.

Sollte ein Störfall beispielsweise im Kühlungssystem während des Betriebs auftreten, so wird zwar ein Ansteigen der Temperatur mit einem damit verbundenen höheren Ausstoß an Reaktionsprodukten in der ersten Schicht 18 erfolgen, die aber dann durch die höhere Menge und höhere Brown'sche Molekularbewegung den längs der Pfeile 23 eintretenden bzw. eindiffundierten, noch zu reagierenden Gasen einen erhöhten Widerstand entgegensetzen, so daß im Endeffekt kein erhöhter Materialtransport in Richtung erste Schicht 18 möglich ist, diese sich also nicht höher aufheizen kann.

In einem weiteren Ausführungsbeispiel eines dem in Fig. 1 entsprechenden Oxidationsreaktors besteht die erste Schicht 18 aus einem Trägerkörper mit guter Wärmeleitfähigkeit, beispielsweise einem Metall oder eine Metallegierung aufweisenden Trägerkörper, auf den der Katalysator aufgebracht ist. Die Ausmaße und der Aufbau der zweiten 20 und dritten Schicht 17 sind dabei identisch, wie bei dem in Zusammenhang mit Fig. 1 beschriebenen Katalysator, d.h. die dritte Schicht 17 besteht aus Silikon und die zweite Schicht 20 aus einem Keramikvlies auf Aluminiumoxydbasis. Beim Zusammenbau des Oxidationsreaktors wird anstatt der ringförmigen Schicht 18 aus porösem Keramikmaterial dann ein entsprechend ausgebildeter metallischer ringförmiger Körper eingesetzt. Dadurch ist auch möglich, bei an sich gleichen Außenmaßen des Reaktorgehäuses 11 verschiedene Beschickungen an erster bzw. zweiter Schicht 17 bzw. 18 einzubringen.

In einem derart aufgebauten Oxidationsreaktor mit einer gut wärmeleitfähigen ersten Schicht 18 zwischen zwei schlechter wärmeleitenden Schichten 17 bzw. 20 besteht der Vorteil, daß insbesondere in der Anlaufphase des Reaktors sich die in der ersten Schicht 18 anfallende Wärme durch deren gute Wärmeleiteigenschaften rasch und gleichmäßig verteilt. Die durch den Einlaß 13 einströmenden, miteinander zu reagierenden Gase diffundieren, wie in Fig. 1 durch die Pfeile angezeigt, zunächst unmittelbar im Bereich des Einlasses 13 in die erste Schicht 18 und reagieren dort unter Wärmeentwicklung. Durch die rasche Temperaturverteilung über die Reaktorlänge und auch über die Dicke der den Katalysator 19 aufweisenden ersten Schicht 18 wird diese homogener und die Flächenbelastung der ersten Schicht 18 gleichmäßiger. Das wirkt sich auf die Lebensdauer der den Katalysator tragenden Schicht positiv aus und führt zu einem insgesamt wirtschaftlichen Oxidationsreaktor.

Bei einem in Fig. 2 gezeigten zweiten Ausführungsbeispiel eines erfindungsgemäßen katalytischen Oxidationsreaktors 30 ist gleichermaßen, wie im Zusammenhang mit Fig. 1 beschrieben, im Innenraum des Reaktors eine erste 18, zweite 20 und dritte Schicht 17 angeordnet, die denselben Aufbau wie die in Zusammenhang mit Fig. 1 beschriebenen Schichten aufweisen. Insoweit werden auch dieselben Bezugszeichen verwendet.

Der Oxidationsreaktor 30 ist als Rührkessel 31 ausgebildet, der ebenfalls im Querschnitt eine kreisförmige Kontur aufweist, dessen freier Reaktorinnenraum 32 jedoch wesentlich größer ist als der des in Fig. 1 gezeigten Rohr- oder Spaltreaktors.

Im Innenraum 32 ist im Bereich des Einlasses 13 eine Mischvorrichtung 33 angeordnet.

Die Mischvorrichtung 33 dient dazu, im Innenraum 32 des Rührkessels 31 eine Gasmischung mit etwa gleicher Zusammensetzung herzustellen. Die in Fig. 2 gezeigte Mischvorrichtung ist als Mischkammer ausgebildet. In weiteren, hier nicht gezeigten Ausführungsbeispielen ist die Mischvorrichtung als Rührer, Injektormischer, Prallmischer od. dgl. ausgeführt.

Die aus der Mischvorrichtung 33 austretenden Gase diffundieren dann vom Innenraum 32, in Richtung zweiter Diffusionssperrschicht 20 gesehen, gleichmäßig über die gesamte Reaktorlänge bzw. -höhe in Richtung katalysatorhaltiger Schicht 18.

Durch die Mischvorrichtung 33 ist sichergestellt, daß auch in der Anlaufphase des Oxidationsreaktors 30 die den Katalysator aufweisende erste Schicht 18 gleichmäßig mit Material versorgt wird, so daß keine lokalen Überhitzungen im Bereich des Einlasses 13 auftreten können. In diesem Fall kann es dann ausreichend sein, auch die erste Schicht 18 aus nicht gut wärmeleitfähigem Material herzustellen.

Wie bereits zuvor erwähnt, ist ein bestimmender Parameter für die Wärmeleistung des Oxidationsreaktors die Zusammensetzung des Gasgemisches der zu reagierenden Gase. Zur Änderung dieses Gasgemisches ist im Auslaß 14 am deckelseitigen Bereich des Oxidationsreaktors 13 eine Abzweigleitung 34 vorgesehen, die zur Mischvorrichtung 33 im Bereich des Einlasses 14 führt. Eine Pumpe 35 zieht einen Teil des aus dem Auslaß 14 abströmenden Gasgemisches von diesem ab und preßt dieses durch die Abzweigleitung 34 in die Mischvorrichtung 33, wo dann dieses Gas mit dem durch den Einlaß 13 eintretenden Gasgemisch vermengt und in den Innenraum 32 gebracht wird.

Durch dieses Einbringen über die Leitung 34 wird eine gute Durchmischung des Gasgemisches erreicht, außerdem kann zur momentanen Drosselung der Wärmeleistung eine erhöhte Menge an "Abgas" zugeführt werden. Das zugeführte "Abgas" wirkt wie ein Inertgas, d.h. es verdünnt die Konzentration an eintretenden reaktionsfähigen Gasen und führt zu einer Minderung des Wärmeausstoßes.

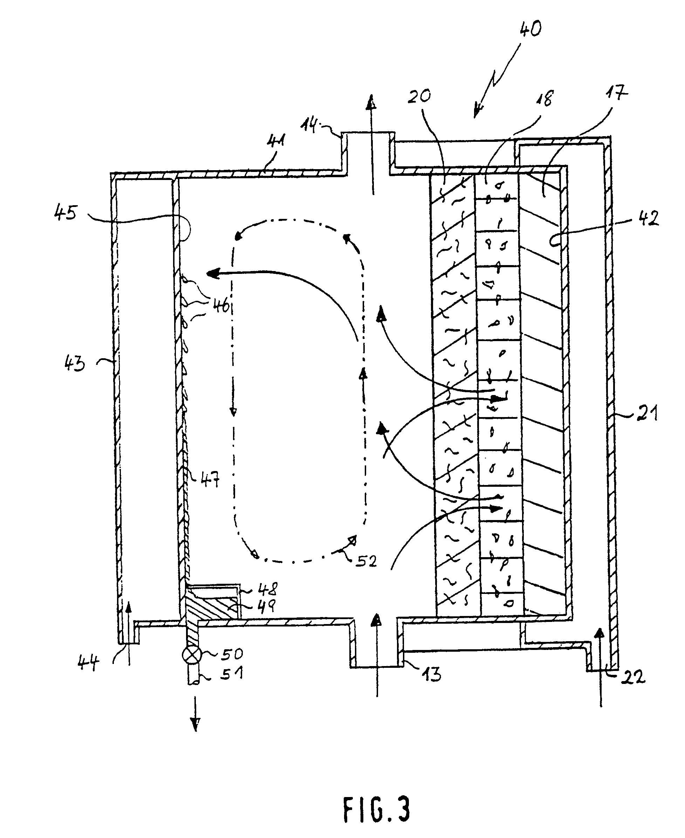

Bei einem in Fig. 3 gezeigten dritten Ausführungsbeispiel eines erfindungsgemäßen Oxidationsreaktors 40 weist dieser ein metallisches Reaktorgehäuse 41 auf, das ein im Querschnitt etwa kreisförmiges Profil aufweist. Die Innenfläche 42 des Reaktorgehäuses 41 ist nur teilweise mit der zuvor beschriebenen ersten 18, zweiten 20, dritten Schicht 17 versehen, die gleichermaßen wie in Zusammenhang mit Fig. 1 und 2 beschrieben, aufgebaut sind, so daß insoweit dieselben Bezugzeichen verwendet werden. Die kreisförmige Innenfläche ist in etwa zur Hälfte, in Umfangsrichtung gesehen, beschichtet.

Der Bereich der dritten Schicht 17 ist wiederum mit einer Kühlung 21 versehen, die über einen Einlaß 22 mit einem Kühlmedium versorgt wird, das über einen hier nicht aufgezeigten Auslaß die Kühlung wieder verläßt.

Die andere Hälfte der Innenfläche (im Schnitt auf der linken Seite) ist frei, jedoch mit einer Kühlung 43 versehen, die durch einen bodenseitigen Einlaß 44 mit einem Kühlmedium gespeist wird. Je nach Einsatzzweck können die Kühlungen 21 bzw. 43 miteinander gekoppelt sein, so daß beispielsweise das Kühlmedium zunächst die Kühlung 43 durchströmt und anschließend der Kühlung 21 zugeführt wird. Soll das in der Kühlung 21 enthaltene Kühlmedium in einem geschlossenen Kreislauf, beispielsweise in Gebäuden zur Heizung verwendet werden, können die beiden Kühlmittelkreisläufe voneinander getrennt sein.

Das durch den bodenseitigen Einlaß 13 in das Reaktorgehäuse 41 einströmende Gasgemisch aus den miteinander zu reagierenden Gasen diffundiert, wie zuvor beschrieben, zunächst durch die zweite Diffusionssperrschicht 20 in Richtung erster Schicht 18, die mit dem Katalysator versehen ist. Die Reaktionsprodukte verlassen die erste Schicht 18 in Richtung zweiter Schicht 20, so daß auch hier wiederum das Gegenstromprinzip erfüllt ist.

Enthalten die aus der zweiten Schicht 20 ausströmenden Reaktionsprodukte kondensierbare Anteile, so schlagen sich diese an der durch die Kühlung 43 gekühlten Innenwand 45 des Reaktorgehäuses 41 zunächst als Tropfen 46 nieder, die sich, in Bodenrichtung gesehen, zu einem Flüssigkeitsfilm 47 vereinigen, der aufgrund der Schwerkraft an der Innenwand 45 in Richtung Boden abläuft.

Zum Auffangen des Flüssigkeitsfilms 47 ist bodenseitig ein Sammelbehälter 48 vorgesehen, in dem das verflüssigte Reaktionskondensat 49 gesammelt wird.

Das Reaktionskondensat 49 kann von Zeit zu Zeit durch Öffnen eines Ventils 50 über eine Abflußleitung 51 aus dem Oxidationsreaktor 40 abgelassen werden.

Das Ventil 50 kann zeitgesteuert oder mit einem im Sammelbehälter 48 vorgesehenen Schwimmer gekoppelt sein, der bei Erreichen einer bestimmten Niveauhöhe im Sammelbehälter 48 das Ventil 50 zur Entleerung öffnet.

Die nicht kondensierbaren Reaktionsprodukte bzw. nicht umgesetzte Ausgangsprodukte oder Inertgase verlassen das Reaktorgehäuse 41 am deckelseitigen Ende durch einen Auslaß 14.

Die Kondensation im Oxidationsreaktor 14 ist sehr vorteilhaft, da dadurch die Konzentration an reaktiven Gasen im Reaktorgehäuse 41 ansteigt und damit die spezifische Umsatzleistung des Reaktors gesteigert wird. Begrenzend für die Kondensationsrate ist der Transport des kondensierbaren Reaktionsproduktes, beispielsweise Wasserdampf, von der zweiten Schicht 20 zur gekühlten Innenwand 45.

Die Strömungsverhältnisse im Reaktorgehäuse 41 sind dabei derart, daß eine Überlagerung der Strömungshauptrichtungen von Einlaß 13 in Richtung 14 und von zweiter Schicht 20 in Richtung gegenüberliegende gekühlte Innenwand 45 zu einer Konvektion führt, wie sie durch die strichpunktierte Linie 52 angedeutet ist. Das bedeutet, im Bereich der mit den Schichten 17, 18, 20 versehenen Innenfläche 42 findet eine Aufwärtsströmung der sich erwärmenden Gase statt, die in Richtung gekühlter Innenwand 45 umgelenkt wird und dort durch fortwährendes Abkühlen eine bodenseitige Strömung verursacht. Dies wird noch dadurch verstärkt, daß die gekühlte Innenwand 45 vom bodenseitigen Einlaß 44 aus in Richtung Deckel durchströmt wird.

In einem weiteren, hier nicht gezeigten Ausführungsbeispiel wird die natürliche Konvektion entlang der strichpunktierten Linie 52 noch dadurch verstärkt, daß im Bereich des Einlasses 13 des Oxidationsreaktors 40, ähnlich wie in Zusammenhang mit Fig. 2 beschrieben, eine Mischvorrichtung angeordnet ist, die beispielsweise einen pulsierenden, durch den Einlaß 13 einströmenden Gasstrom erzeugt.

Der in Fig. 3 gezeigte Oxidationsreaktor 40 wird in Betrieb vorzugsweise mit einem Überdruck ab 0,5 bar betrieben, was das mit Volumenverringerung verbundene Auskondensieren noch zusätzlich begünstigt.

Weist der Oxidationsreaktor 40, wie zuvor beschrieben, einen in etwa kreisförmigen Querschnitt auf, so bestehen die erste 18, und zweite Schicht 20 aus Halbringen, die in das Reaktorgehäuse 41 eingesetzt werden können. Auch damit ist eine flexible Anpassung an verschiedene, flammlos zu verbrennende Gasmischungen im Oxidationsreaktor 40 möglich.

## Patentansprüche

1. Katalytischer Oxidationsreaktor (10, 30, 40) für zündfähige Gasgemische, die Sauerstoff und zumindest ein mit diesem brennbares Gas aufweisen, wobei der Reaktor (12) mit einem Kühlmedium in Verbindung steht und im Reaktor (12) eine gasdurchlässige, einen Katalysator (19) für die Oxidationsreaktion aufweisende erste Schicht (18) angeordnet ist, dadurch gekennzeichnet, daß die erste Schicht (18) auf der einen, dem Gasgemisch zugewandten Seite, mit einer gasdurchlässigen zweiten Schicht (20) und auf der anderen Seite mit einer gas- und flüssigkeitsundurchlässigen und mit dem Kühlmedium in thermischem Kontakt stehenden dritten Schicht (17) versehen ist und daß die dritte Schicht (17) schlecht wärmeleitend ist.

2. Katalytischer Oxidationsreaktor nach Anspruch 1, **dadurch gekennzeichnet**, daß die zweite Schicht (20) eine schlechte thermische Leitfähigkeit aufweist.

3. Katalytischer Oxidationsreaktor nach Anspruch 1 oder 2, **dadurch gekennzeichnet**, daß die erste (18) und zweite Schicht (20) aus demselben Trägermaterial aufgebaut sind und das Trägermaterial der ersten Schicht (18) mit dem Katalysator (19) versehen ist.

4. Katalytischer Oxidationsreaktor nach Anspruch 1 oder einem der folgenden, **dadurch gekennzeichnet**, daß die erste (18) bzw. zweite (20) jeweils gasdurchlässige Schicht in Form poröser Körper, Wollen, Vliese, Schäume oder Gewebe aus Keramik, Mineralien, Glas, Asbest oder Kunststoff bestehen.

5. Katalytischer Oxidationsreaktor nach einem der Ansprüche 1 bis 4, **dadurch gekennzeichnet**, daß die erste (18) bzw. zweite Schicht (20) aus Verbundmaterialien wie beispielsweise kunststoffgebundene Kohlen, bestehen.

6. Katalytischer Oxidationsreaktor nach einem der vorhergehenden Ansprüche, **dadurch gekennzeichnet**, daß die erste Schicht (18) eine höhere Wärmeleitfähigkeit aufweist als die zweite Schicht (20).

7. Katalytischer Oxidationsreaktor nach Anspruch 6, **dadurch gekennzeichnet**, daß die erste Schicht (18) aus Metall, Metallegierungen oder Metall enthaltenden gasdurchlässigen Materialien oder aus Kohlenastoff besteht.

8. Katalytischer Oxidationsreaktor nach Anspruch 1 oder einem der folgenden, **dadurch gekennzeichnet**, daß der Katalysator (19) ein Element der Platingruppe, vorzugsweise Platin selbst, ist.

9. Katalytischer Oxidationsreaktor nach einem der Ansprüche 1 bis 7, **dadurch gekennzeichnet**, daß der Katalysator (19) ein Silber-Kobalt-Mangan-Mischkatalysator ist.

10. Katalytischer Oxidationsreaktor nach Anspruch 1 oder einem der folgenden, **dadurch gekennzeichnet**, daß die dritte Schicht (17) eine schlechtere Wärmeleitfähigkeit aufweist als die erste Schicht (18).

11. Katalytischer Oxidationsreaktor nach Anspruch 1 oder einem der folgenden, **dadurch gekennzeichnet**, daß die erste Schicht (18) eine bessere Leitfähigkeit als die zweite (20) und die dritte Schicht (17) aufweist.

12. Katalytischer Oxidationsreaktor nach Anspruch 1 oder einem der folgenden, **dadurch gekennzeichnet**, daß die dritte Schicht (17) aus Kunststoff, wie beispielsweise Silikon oder Kunststoff-Verbundwerkstoffen besteht.

13. Katalytischer Oxidationsreaktor nach einem der Ansprüche 1 bis 11, **dadurch gekennzeichnet**, daß die dritte Schicht (17) aus dichtem Keramikmaterial oder aus Glas besteht.

14. Katalytischer Oxidationsreaktor nach einem der vorhergehenden Ansprüche, **dadurch gekennzeichnet**, daß die Innenfläche (16) des Oxidationsreaktors (10, 30) mit der dritten Schicht (17) ausgekleidet ist, auf der die erste (18) und darauf wiederum die zweite Schicht (20) angeordnet ist.

15. Katalytischer Oxidationsreaktor nach einem der vorhergehenden Ansprüche, **dadurch gekennzeichnet**, daß der Oxidationsreaktor (10, 30) als Rohrreaktor ausgebildet ist, in dem die Schichten konzentrisch angeordnet sind.

16. Katalytischer Oxidationsreaktor nach Anspruch 1 oder einem der folgenden, **dadurch gekennzeichnet**, daß die Außenfläche des Reaktors (10, 30, 40) in dem Bereich mit einem Kühlmedium in Verbindung steht, in dem er an seiner Innenseite (16, 42) mit der dritten Schicht (17) versehen ist.

17. Katalytischer Oxidationsreaktor nach Anspruch 1 oder einem der folgenden, **dadurch gekennzeichnet**, daß der Reaktor (30) mit einer Mischvorrichtung (33) versehen ist, wodurch im Reaktorinnenraum (32) eine hohe Gleichmäßigkeit der Gasgemischzusammensetzung erreicht ist.

18. Katalytischer Oxidationsreaktor nach Anspruch 17, **dadurch gekennzeichnet**, daß in der Mischvorrichtung (33) ein Teil der aus dem Reaktorraum (32) austretenden Gase zugemischt wird.

19. Katalytischer Oxidationsreaktor nach Anspruch 14, **dadurch gekennzeichnet**, daß die Innenfläche (42) des Reaktors (40) nur teilweise mit den Schichten (17, 18, 20) versehen ist und eine freie Innenfläche (45) derart mit dem Kühlmedium in Verbindung steht, daß kondensierbare Reaktionsprodukte an dieser freien Fläche (45) auskondensierbar sind.

20. Katalytischer Oxidationsreaktor nach Anspruch 19, **dadurch gekennzeichnet**, daß im Bodenbereich des Reaktorgehäuses (41) ein Sammelbehälter (48) für das Reaktionskondensat (49) vorgesehen ist, der über Ventile (50), wie Schwimmerventile von Zeit zur Zeit entleerbar ist.

21. Katalytischer Kondensationsreaktor nach Anspruch 1 oder einem der folgenden, **dadurch gekennzeichnet**, daß er mit einem Überdruck, insbesondere $\geq 0,5$ bar betreibbar ist.

22. Katalytischer Oxidationsreaktor nach Anspruch 1 oder einem der folgenden, **dadurch gekennzeichnet**, daß das Gasgemisch eine stöchiometrische Knallgasmischung ist.

23. Katalytischer Oxidationsreaktor nach einem der Ansprüche 1 bis 21, **dadurch gekennzeichnet**, daß das Gasgemisch Methan und/oder Propan und/oder Kohlenmonoxyd od. dgl. als brennbares Gas aufweist.

24. Katalytischer Oxidationsreaktor nach Anspruch 1 oder einem der folgenden, **dadurch gekennzeichnet,** daß dem Gasgemisch ein Inertgas, beispielsweise Stickstoff, zumischbar ist.

25. Katalytischer Oxidationsreaktor nach Anspruch 1 oder einem der folgenden, **dadurch gekennzeichnet,** daß bei Betrieb mit kondensierbaren Reaktionsprodukten eine Mischvorrichtung vorgesehen ist, die einen pulsierenden Gasstrom im Reaktor erzeugt, wodurch eine verbesserte Konvektion bei gleichzeitiger Kondensation im Reaktorraum erreichbar ist.

## Revendications

1. Réacteur catalytique à oxydation (10, 30, 40) pour mélanges gazeux inflammables qui contiennent de l'oxygène et au moins un gaz combustible avec ce dernier, dans lequel le réacteur (12) est en contact avec un fluide de refroidissement, et une première couche perméable aux gaz (18), comportant un catalyseur (19) pour la réaction d'oxydation est disposée dans le réacteur (12), caractérisé en ce que la première couche (18) est pourvue, sur un côté tourné vers le mélange gazeux, d'une deuxième couche perméable aux gaz (20) et, de l'autre côté, d'une troisième couche (17), imperméable aux gaz et aux liquides et en contact thermique avec le fluide de refroidissement, et que la troisième couche (17) est un mauvais conducteur de chaleur.

2. Réacteur catalytique à oxydation selon la revendication 1, caractérisé en ce que la deuxième couche (20) présente une mauvaise conductibilité thermique.

3. Réacteur catalytique à oxydation selon la revendication 1 ou 2, caractérisé en ce que la première couche (18) et la deuxième couche (20) sont constituées du même matériau de support, et le matériau de support de la première couche (18) est pourvu du catalyseur (19).

4. Réacteur catalytique à oxydation selon la revendication 1 ou l'une des revendications suivantes, caractérisé en ce que la première couche (18) et la deuxième couche (20), toutes les deux perméables aux gaz, se présentent sous forme de corps poreux, de laine, de non-tissés, de mousses ou de tissus, à base de céramique, de minéraux, de verre, d'amiante ou de matière plastique.

5. Réacteur catalytique à oxydation selon l'une des revendications 1 à 4, caractérisé en ce que la première couche (18) et la deuxième couche (20) sont composées de matériaux composites, comme par exemple des charbons combinés à des matières synthétiques.

6. Réacteur catalytique à oxydation selon l'une des revendications précédentes, caractérisé en ce que la première couche (18) présente une conductibilité thermique plus élevée que celle de la deuxième couche (20).

7. Réacteur catalytique à oxydation selon la revendication 6, caractérisé en ce que la première couche (18) est en métal, en alliages métalliques ou en matériaux perméables aux gaz et contenant du métal, ou en carbone.

8. Réacteur catalytique à oxydation selon la revendication 1 ou l'une des revendications suivantes, caractérisé en ce que la catalyseur (19) est un élément du groupe platine, de préférence le platine proprement dit.

9. Réacteur catalytique à oxydation selon l'une des revendications 1 à 7, caractérisé en ce que le catalyseur (19) est un catalyseur mixte à l'argent-cobalt-manganèse.

10. Réacteur catalytique à oxydation selon la revendication 1 ou l'une des revendications suivantes, caractérisé en ce que la troisième couche (17) présente une conductibilité thermique plus mauvaise que celle de la première couche (18).

11. Réacteur catalytique à oxydation selon la revendication 1 ou l'une des revendications suivantes, caractérisé en ce que la première couche (18) présente une conductivité meilleure que celle de la deuxième couche (20) et de la troisième couche (17).

12. Réacteur catalytique à oxydation selon la revendication 1 ou l'une des revendications suivantes, caractérisé en ce que la troisième couche (17) est composée de matière plastique, comme par exemple du silicone ou des matériaux composites en matière plastique.

13. Réacteur catalytique à oxydation selon l'une des revendications 1 à 11, caractérisé en ce que la troisième couche (17) est composée d'un matériau céramique dense ou de verre.

14. Réacteur catalytique à oxydation selon l'une des revendications précédentes, caractérisé en ce que la surface interne (16) du réacteur à oxydation (10, 30) est recouverte de la troisième couche (17), sur laquelle est disposée est la première couche (18), elle-même recouverte de la deuxième couche (20).

15. Réacteur catalytique à oxydation selon l'une des revendications précédentes, caractérisé en ce que le réacteur à oxydation (10, 30) est réalisé sous forme de réacteur tubulaire, dans lequel les couches sont disposées de manière concentrique.

16. Réacteur catalytique à oxydation selon la revendication 1 ou l'une des revendications suivantes, caractérisé en ce que la surface externe du réacteur (10, 30, 40) est en contact avec un fluide de refroidissement dans la zone où il est pourvu de la troisième couche (17) sur sa face intérieure (16, 42).

17. Réacteur catalytique à oxydation selon la revendication 1 ou l'une des revendications suivantes, caractérisé en ce que le réacteur (30) est pourvu d'un dispositif mélangeur (33), ce qui permet d'obtenir une grande homogénéité de la composition du mélange gazeux à l'intérieur (32) du réacteur.

18. Réacteur catalytique à oxydation selon la revendication 17, caractérisé en ce qu'une partie des gaz sortant de l'enceinte du réacteur (32) est mélangée dans le dispositif mélangeur (33).

19. Réacteur catalytique à oxydation selon la revendication 14, caractérisé en ce que la surface interne (42) du réacteur (40) est pourvue des couches (17, 18, 20) seulement en partie, et une surface interne libre (45) est en contact avec le fluide de refroidissement de telle manière que des produits réactionnels condensables peuvent être condensés sur cette surface libre (45).

20. Réacteur catalytique à oxydation selon la revendication 19, caractérisé en ce qu'un réservoir (48) pour recueillir le condensat réactionnel (49) est prévu au fond de l'enceinte de réacteur (41), qu'on peut vider de temps en temps au moyen de soupapes (50), comme des soupapes à flotteur.

21. Réacteur catalytique à oxydation selon la revendication 1 ou l'une des revendications suivantes, caractérisé en ce qu'on peut le faire fonctionner en régime de surpression, en particulier à une pression $\geq$ 0,5 bar.

22. Réacteur catalytique à oxydation selon la revendication 1 ou l'une des revendications suivantes, caractérisé en ce que le mélange gazeux est un mélange stoechiométrique de gaz explosifs.

23. Réacteur catalytique à oxydation selon l'une des revendications 1 à 21, caractérisé en ce que le mélange gazeux comporte du méthane et/ou du propane et/ou du monoxyde de carbone ou analogues, comme gaz combustible.

24. Réacteur catalytique à oxydation selon la revendication 1 ou l'une des revendications suivantes, caractérisé en ce qu'on peut ajouter un gaz inerte, par exemple de l'azote, au mélange gazeux.

25. Réacteur catalytique à oxydation selon la revendication 1 ou l'une des revendications suivantes, caractérisé en ce qu'il est prévu, pour un fonctionnement avec des produits réactionnels condensables, un dispositif mélangeur qui produit un flux gazeux pulsatoire dans le réacteur, ce qui permet d'obtenir une meilleure convection, avec une condensation simultanée à l'intérieur du réacteur.

## Claims

1. Catalytic oxidation reactor (10, 30, 40) for ignitable gas mixtures which contain oxygen and at least one gas which is combustible with the latter, the reactor (12) being connected to a coolant and a gas-permeable first layer (18), containing a catalyst (19) for the oxidation reaction, being located in the reactor (12), characterised in that the first layer (18) is provided on one side, facing the gas mixture, with a gas-permeable second layer (20) and, on the other side, with a gas- and liquid-impermeable third layer (17) in thermal contact with the coolant, and that the third layer (17) has a low thermal conductivity.

2. Catalytic oxidation reactor according to Claim 1, characterised in that the second layer (20) has a low thermal conductivity.

3. Catalytic oxidation reactor according to Claim 1 or 2, characterised in that the first (18) and second layer (20) are built up from the same support material, and the support material of the first layer (18) is provided with the catalyst (19).

4. Catalytic oxidation reactor according to Claim 1 or one of the subsequent claims, characterised in that the first (18) and/or second (20) layers, which are each gas-permeable, in the form of porous bodies, wools, nonwovens, foams or woven structures, consist of ceramics, minerals, glass, asbestos or plastic.

5. Catalytic oxidation reactor according to one of Claims 1 to 4, characterised in that the first (18) and/or second layers (20) consist of composite materials such as, for example, plastic-bonded carbon.

6. Catalytic oxidation reactor according to one of the preceding claims, characterised in that the first layer (18) has a thermal conductivity higher than that of the second layer (20).

7. Catalytic oxidation reactor according to Claim 6, characterised in that the first layer (18) consists of metal, metal alloys or metal-containing gas-permeable materials or of carbon.

8. Catalytic oxidation reactor according to Claim 1 or one of the subsequent claims, characterised in that the catalyst (19) is an element of the platinum group, preferably platinum itself.

9. Catalytic oxidation reactor according to one of Claims 1 to 7, characterised in that the catalyst (19) is a mixed silver/cobalt/manganese catalyst.

10. Catalytic oxidation reactor according to Claim 1 or one of the subsequent claims, characterised in that the third layer (17) has a thermal conductivity lower than that of the first layer (18).

11. Catalytic oxidation reactor according to Claim 1 or one of the subsequent claims, characterised in that the first layer (18) has a conductivity higher than that of the second (20) and third layers (17).

12. Catalytic oxidation reactor according to Claim 1 or one of the subsequent claims, characterised in that the third layer (17) consists of plastic such as, for example, silicone or composite plastic materials.

13. Catalytic oxidation reactor according to one of Claims 1 to 11, characterised in that the third layer (17) consists of dense ceramic material or of glass.

14. Catalytic oxidation reactor according to one of the preceding claims, characterised in that the inner surface (16) of the oxidation reactor (10, 30) is lined with the third layer (17), on which the first layer (18) and, thereon in turn, the second layer (20) are arranged.

15. Catalytic oxidation reactor according to one of the preceding claims, characterised in that the oxidation reactor (10, 30) is designed as a tube reactor, in which the layers are arranged concentrically.

16. Catalytic oxidation reactor according to Claim 1 or one of the subsequent claims, characterised in that the outer surface of the reactor (10, 30, 40) is connected to a coolant in the region in which it is provided on its inside (16, 42) with the third layer (17).

17. Catalytic oxidation reactor according to Claim 1 or one of the subsequent claims, characterised in that the reactor (30) is provided with a mixing device (33), whereby a high homogeneity of the gas mixture composition is achieved in the reactor interior (32).

18. Catalytic oxidation reactor according to Claim 17, characterised in that, in the mixing device (33), part of the gases leaving the reactor space (32) is mixed in.

19. Catalytic oxidation reactor according to Claim 14, characterised in that the inner surface (42) of the reactor (40) is only partially provided with the layers (17, 18, 20) and a free inner surface (45) is connected to the coolant in such a way that condensable reaction products can be condensed out on this free surface (45).

20. Catalytic oxidation reactor according to Claim 19, characterised in that, in the bottom region of the reactor housing (41), a receiver (48) for the reaction condensate (49) is provided, which receiver can be drained from tire to time via valves (50) such as float valves.

21. Catalytic condensation (sic) reactor according to Claim 1 or one of the subsequent claims, characterised in that it can be operated at a positive pressure, especially $\geq 0.5$ bar.

22. Catalytic oxidation reactor according to Claim 1 or one of the subsequent claims, characterised in that the gas mixture is a stoichiometric oxyhydrogen gas mixture.

23. Catalytic oxidation reactor according to one of Claims 1 to 21, characterised in that the gas mixture contains methane and/or propane and/or carbon monoxide or the like as the combustible gas.

24. Catalytic oxidation reactor according to Claim 1 or one of the subsequent claims, characterised in that an inert gas, for example nitrogen, can be admixed to the gas mixture.

25. Catalytic oxidation reactor according to Claim 1 or one of the subsequent claims, characterised in that, in operation with condensable reaction products, a mixing device is provided which generates a pulsed gas stream in the reactor, whereby improved convection with simultaneous condensation in the reactor space is achievable.

FIG. 1

FIG. 2

FIG.3